# EUROPÄISCHE PATENTSCHRIFT

(11) **EP 3 211 286 B1**
(45) Veröffentlichungstag und Bekanntmachung des Hinweises auf die Patenterteilung: **18.04.2018**
(21) Anmeldenummer: 16157666.5
(22) Anmeldetag: 26.02.2016
(51) Int. Cl.: F16M 7/00

(54) **MASCHINENSCHUH UND MASCHINE**
MACHINE SHOE AND MACHINE
SABOT DE MACHINE ET MACHINE

(43) Veröffentlichungstag der Anmeldung: 30.08.2017
(73) Patentinhaber: CITEC Technical Trading GmbH, 40878 Ratingen (DE)
(72) Erfinder: Zhu, Hao, 40878 Ratingen (DE)
(74) Vertreter: Schweiger, Johannes

(56) Entgegenhaltungen:
- EP-A1- 0 503 701
- DE-A1-102010 054 772
- US-A- 4 991 805

## Beschreibung

Die Erfindung betrifft einen Maschinenschuh sowie eine Maschine.
Maschinenschuhe werden zwischen einer Maschine und einem Untergrund, auf dem die Maschine aufzustellen ist, angeordnet. Sie dienen dazu, Unebenheiten des Untergrundes auszugleichen, so dass die Maschine über wenigstens einen zwischen der Maschine und dem Untergrund angeordneten Maschinenschuh auf dem Untergrund in der gewünschten Stellung aufgestellt und nivelliert werden kann. Zur Nivellierung der Maschine auf dem Untergrund über einen solchen Maschinenschuh weisen Maschinenschuhe jeweils ein verstellbares Nivellierglied auf. Über dieses Nivellierglied ist der Abstand zwischen der Maschine und dem Untergrund einstellbar.

Ein üblicher Maschinenschuh, wie z.B. aus der US 4,991,805 bekannt, weist beispielsweise ein Gehäuse und ein Nivellierglied in Form eines Gewindebolzens auf, der über eine Schraubbewegung in das Gehäuse hinein und aus diesem herausschraubbar ist. Durch eine entsprechende Verstellbarkeit des Gewindebolzens eines solchen Maschinenschuhs ist eine Maschine, an deren Fuß ein solcher Maschinenschuh angeordnet ist, auf einem Untergrund aufstellbar und nivellierbar.

Ein weiterer verbreiteter Maschinenschuh umfasst ein Nivellierglied in Form einer Anzahl gegeneinander auflaufbarer Keile, wobei sich die Höhe der Anordnung dieser Keile je nach deren Auflaufgrad einstellen lässt.

Problematisch ist bei den aus dem Stand der Technik bekannten Maschinenschuhen die Verstellbarkeit des Nivelliergliedes. So ist ein Nivellierglied in Form eines Gewindebolzens in der Regel über einen Maulschlüssel verstellbar. Hierdurch lässt sich der Gewindebolzen jedoch nur sehr grob verstellen. Problematisch ist ferner der hohe Schwenkradius des Maulschlüssels bei einer Verstellbarkeit des Nivelliergliedes, da im Bereich zwischen Maschine und Untergrund häufig nur ein begrenzter Raum zur Verfügung steht. Häufig muss zur Verstellbarkeit des Nivelliergliedes daher zunächst ein Teil der Verkleidung der Maschine entfernt werden. Dies gilt entsprechend bei Maschinenschuhen, die ein Nivellierglied in Form einer Keilanordnung aufweisen. Auch bei diesen wird der Auflaufgrad der Keile in der Regel über einen Gewindebolzen, über den die Keile aufeinander zu- oder voneinander wegbewegbar sind, erreicht.

Der Erfindung liegt die Aufgabe zu Grunde, einen Maschinenschuh zur Verfügung zu stellen, über den eine sehr genaue Nivellierung der Maschine auf einem Untergrund möglich ist.

Eine weitere Aufgabe der Erfindung besteht darin, einen Maschinenschuh zur Verfügung zu stellen, dessen Nivellierglied sehr einfach verstellbar ist.

Eine weitere Aufgabe der Erfindung besteht darin, einen Maschinenschuh zur Verfügung zu stellen, dessen Nivellierglied auch bei einem sehr begrenzten Raumangebot einfach verstellbar ist.

Eine weitere Aufgabe der Erfindung besteht darin, eine Maschine zur Verfügung zu stellen, die über wenigstens einen solchen Maschinenschuh auf einem Untergrund angeordnet ist.

Zur Lösung dieser Aufgaben wird erfindungsgemäß zur Verfügung gestellt ein Maschinenschuh, der die folgenden Merkmale umfasst:
- ein verstellbares Nivellierglied zur Nivellierung einer Maschine auf einem Untergrund;
- ein Kegelradgetriebe;
- das Nivellierglied und das Kegelradgetriebe stehen derart miteinander in Eingriff, dass das Nivellierglied über das Kegelradgetriebe verstellbar ist.

Überraschend hat sich erfindungsgemäß herausgestellt, dass ein Maschinenschuh zur Verfügung gestellt werden kann, der die vorstehend genannte Aufgaben löst, soweit der Maschinenschuh ein Kegelradgetriebe umfasst, wobei das Nivellierglied und das Kegelradgetriebe derart miteinander in Eingriff stehen, dass das Nivellierglied mittels des Kegelradgetriebes verstellbar ist.

Kegelradgetriebe sind aus dem Stand der Technik bekannt. Kegelradgetriebe umfassen wenigstens zwei Kegelräder, wobei die Kegelräder über jeweilige Zähne der Kegelräder miteinander in Eingriff treten. Die Kegelräder sind jeweils um eine Drehachse drehbar. Dabei ist das Kegelradgetriebe derart ausgebildet, dass ein über ein Drehmoment angetriebenes und dabei um seine Drehachse gedrehtes erstes Kegelrad (Antriebskegelrad) mittels Eingriffs in die Zähne eines weiteren Kegelrades (Abtriebskegelrad) das Drehmoment des ersten Kegelrades auf dieses weitere Kegelrad überträgt und dabei in eine Drehbewegung um die Drehachse des weiteren Kegelrades beziehungsweise Abtriebskegelrades zwingt.

Die Drehachsen des Antriebskegelrades und des Abtriebskegelrades können sich in einem Punkt schneiden oder nicht schneiden. Die letztere Ausführungsform von Kegelradgetrieben werden als auch als Hypoidkegelradgetriebe bezeichnet. In der Regel verlaufen die Drehachsen von Antriebskegelrad und Abtriebskegelrad in einem Winkel von 90° zueinander, wobei jedoch auch andere Winkelstellungen zueinander möglich und bekannt sind.

Übliche Anwendungen für Kegelradgetriebe sind der Automobilbau, die Automation und der Maschinenbau.

Überraschenderweise hat sich im Rahmen der Erfindung herausgestellt, dass sich solche Kegelradgetriebe auch in hervorragender Weise dazu eignen, das Nivellierglied eines Maschinenschuhs zu verstellen.

So hat die Verwendung eines Kegelradgetriebes zur Verstellung des Nivelliergliedes eines Maschinenschuhs den Vorteil, dass das Nivellierglied besonders genau über das Kegelradgetriebe verstellbar ist. Denn durch die Einstellung der Übersetzung des Kegelradgetriebes sind Grad und Feinheit der Verstellbarkeit des Nivelliergliedes über das Kegelradgetriebe genau wählbar beziehungsweise einstellbar.

Ein weiterer Vorteil der Verwendung eines Kegelradgetriebes zur Verstellbarkeit des Nivelliergliedes besteht auch darin, dass zum Antrieb des Kegelradgetriebes nur ein sehr geringer Raumbedarf notwendig ist. Insbesondere entfällt ein großer Raumbedarf zur Verstellung des Nivelliergliedes, wie er beispielsweise durch den Schwenkradius eines Maulschlüssels bedingt ist.

Vorteilhaft an der Verwendung eines Kegelradgetriebes zur Verstellung des Nivelliergliedes ist ferner auch, dass ein Kegelradgetriebe nur einen sehr geringen Raumbedarf benötigt, so dass ein erfindungsgemäßer Maschinenschuh sehr kompakt zur Verfügung gestellt werden kann.

Ferner ist sehr vorteilhaft an der Verwendung eines Kegelradvertriebes zur Verstellung des Nivelliergliedes des Maschinenschuhs, dass ein Kegelgetriebe äußerst robust und wartungsarm ist, so dass ein erfindungsgemäßer Maschinenschuh insgesamt sehr robust oder wartungsarm oder sogar wartungsfrei zur Verfügung gestellt werden kann.

Der Maschinenschuh ist derart ausgebildet, dass er auf einem Untergrund anordenbar ist. Ferner ist der Maschinenschuh derart ausgebildet, dass er derart zwischen einer Maschine und einem Untergrund anordenbar ist, dass die Maschine über den Maschinenschuh auf einem Untergrund aufstellbar und über das Nivellierglied des Maschinenschuhs nivellierbar ist.

Der Maschinenschuh kann derart ausgebildet sein, dass er auf einem Untergrund befestigbar ist. Beispielsweise kann der Maschinenschuh hierzu Mittel aufweisen, über die der Maschinenschuh auf einem Untergrund befestigbar ist. Beispielsweise kann der Maschinenschuh Öffnungen oder dergleichen Mittel aufweisen, durch die ein Befestigungsmittel, beispielsweise eine Schraube, ein Anker oder ein Gewindebolzen führbar ist, über die der Maschinenschuh auf einem Untergrund befestigbar ist.

Bevorzugt ist der Maschinenschuh derart ausgebildet, dass das Nivellierglied entlang einer Längsachse des Nivelliergliedes verstellbar beziehungsweise bewegbar ist. Dabei ist der Maschinenschuh bevorzugt derart auf einem Untergrund anordenbar beziehungsweise befestigbar, dass diese Längsachse des Nivelliergliedes, entlang derer das Nivelliergliedes bei dessen Verstellung bewegbar beziehungsweise verstellbar ist, bei Anordnung beziehungsweise Befestigung des Maschinenschuhs auf einem Untergrund vertikal verläuft.

Nach einer bevorzugten Ausführungsform umfasst der Maschinenschuh ein Gehäuse. Dabei kann das Nivellierglied entlang einer durch das Gehäuse verlaufende Längssachse bewegbar beziehungsweise verstellbar sein.

Der Maschinenschuh kann beispielsweise derart ausgebildet sein, dass das Nivellierglied bei seiner Verstellung beziehungsweise Bewegung entlang der Längssachse des Nivelliergliedes zumindest abschnittsweise in das Gehäuse hineinbewegbar und aus diesem heraus bewegbar ist.

Das Kegelradgetriebe des Maschinenschuhs kann zumindest abschnittsweise, beispielsweise auch vollständig in dem Gehäuse des Maschinenschuhs angeordnet sein.

Das Kegelradgetriebe des erfindungsgemäßen Maschinenschuhs kann maschinell antreibbar sein, beispielsweise über eine Kraftmaschine, beispielsweise über einen Elektromotor.

Bevorzugt ist das Kegelradgetriebe jedoch derart ausgebildet, dass es manuell antreibbar ist. Der besondere Vorteil einer solchen manuellen Antreibbarkeit des Kegelgetriebes liegt insbesondere auch darin, dass das Kegelradgetriebe besonders robust und einfach ausgebildet sein kann und der Maschinenschuh in diesem Fall besonders wartungsarm oder wartungsfrei zur Verfügung gestellt werden kann.

Zur manuellen Antreibbarkeit des Kegelradgetriebes kann dieses beispielsweise Mittel aufweisen, in die ein manuell handhabbares Handhabungsmittel derart eingreifbar ist, dass das Kegelradgetriebe bei einem Eingriff des Handhabungsmittels in das Kegelradgetriebe über das Handhabungsmittel manuell antreibbar ist.

Das Kegelradgetriebe des erfindungsgemäßen Maschinenschuhs umfasst ein Antriebskegelrad und ein Abtriebskegelrad. Dabei ist das Antriebskegelrad derart ausgebildet, dass es antreibbar ist, beispielsweise, wie vorstehend ausgeführt, maschinell oder manuell antreibbar ist. Beispielsweise kann das Antriebskegelrad, wie zuvor ausgeführt, zur manuellen Antreibbarkeit ein Eingreifmittel aufweisen, in die ein manuell handhabbares Handhabungsmittel eingreifbar ist, das das Antriebskegelrad über die Handhabung des Handhabungsmittels manuell antreibbar ist. Bevorzugt ist ein solches Eingreifmittel derart ausgebildet, dass das Handhabungsmittel formschlüssig in dieses eingreifbar ist. Besonders bevorzugt weist das Antriebskegelrad ein solches Eingreifmittel im Bereich der Drehachse des Antriebskegelrades auf. Besonders bevorzugt kann ein Eingreifmittel des Antriebskegelrades dadurch ausgebildet sein, dass das freie Ende des Welle des Antriebskegelrades in einem Außensechskant endet. In diesem Fall kann ein handhabbares Handhabungsmittel in Form eines Innensechskantschlüssels vorgesehen sein, der formschlüssig in den Außensechskant eingreifbar und über den das Antriebskegelrad manuell antreibbar ist. Soweit der Maschinenschuh ein Gehäuse aufweist, in dem das Kegelradgetriebe zumindest abschnittsweise angeordnet ist, kann das Gehäuse eine Öffnung aufweisen, durch welche ein Antriebsmittel für das Antriebsrad mit diesem in Eingriff bringbar ist. Beispielsweise kann das Gehäuse insoweit eine Öffnung aufweisen, durch welche ein Handhabungsmittel zur manuellen Antreibung des Antriebskegelrades mit diesem in Eingriff bringbar ist. Beispielsweise kann das, wie zuvor ausgeführt, als Außensechskant ausgebildete freie Ende der Welle des Antriebskegelrades durch eine Öffnung des Gehäuses geführt sein.

Die Zähne des Antriebskegelrades treten derart in Eingriff mit den Zähnen des Abtriebskegelrades, dass das Abtriebskegelrad bei einer Drehung des Antriebskegelrades um seine Drehachse das Abtriebskegelrad in eine Drehung um die Drehachse des Abtriebskegelrades zwingt, wodurch das Drehmoment des Antriebskegelrades auf das Abtriebskegelrades übertragbar ist. Das Kegelradgetriebe des erfindungsgemäßen Schuhs kann gemäß dem Stand der Technik ausgebildet sein. Beispielsweise können die Zähne der Kegelräder geradgezahnt, schrägverzahnt oder bogenverzahnt ausgebildet sein. Die Kegelräder des Kegelradgetriebes sind im erfindungsgemäßen Maschinenschuh jeweils um deren Drehachse drehbar gelagert. Bevorzugt sind die Kegelräder derart angeordnet, dass sich deren Drehachsen schneiden. Ferner sind die Kegelräder bevorzugt derart angeordnet, dass sich die Drehachsen der Kegelräder in einem Winkel von 90° schneiden.

Nach einer besonders bevorzugten Ausführungsform sind die Kegelräder derart angeordnet, dass bei Anordnung beziehungsweise Befestigung des Maschinenschuhs auf einen Untergrund die Drehachse des Antriebskegelrades horizontal und die Drehachse des Abtriebskegelrades vertikal verläuft.

Eine solche Ausführungsform hat insbesondere auch den Vorteil, dass auf Grund des horizontalen Verlaufs der Drehachse des Antriebskegelrades dieses besonders einfach antreibbar ist, insbesondere auch über manuell handhabbare Handhabungsmittel.

Der erfindungsgemäße Maschinenschuh ist bevorzugt insbesondere derart ausgebildet, dass das Nivellierglied mittels des Abtriebskegelrades, insbesondere mittels einer Drehbewegung des Abtriebskegelrades verstellbar ist. Besonders bevorzugt ist das Nivelliergerät derart mittels einer Drehbewegung des Abtriebskegelrades verstellbar, dass das Nivellierglied mittels einer Drehbewegung des Abtriebskegelrades entlang der Längsachse des Nivelliergliedes bewegbar ist. Nach einer besonders bevorzugten Ausführungsform verläuft die Längsachse des Nivelliergliedes parallel, insbesondere koaxial zur Drehachse des Abtriebskegelrades.

Dem Fachmann stehen ohne weiteres zahlreiche Mittel zur Verfügung, durch die das Nivellierglied mittels einer Drehbewegung des Abtriebskegelrades in eine Längsbewegung, insbesondere eine Längsbewegung entlang der Längsachse des Nivelliergliedes bewegbar ist.

Insoweit kann beispielsweise vorgesehen sein, dass das Nivellierglied eine Rampe aufweist, auf die ein Element des Abtriebskegelrades bei dessen Drehbewegung auf- oder abläuft, so dass das Nivellierglied durch eine Drehbewegung des Abtriebskegelrades in eine Längsbewegung entlang der Drehachse des Abtriebskegelrades beziehungsweise entlang der Längsachse des Nivelliergliedes bewegt wird.

Nach einer besonders bevorzugten Ausführungsform ist eine Drehbewegung des Abtriebskegelrades dadurch in eine Längsbewegung des Nivelliergliedes übersetzbar, dass das Nivellierglied schraubbar angeordnet ist, insbesondere über eine Gewindeverbindung schraubbar ist. Beispielsweise kann vorgesehen sein, dass der Maschinenschuh ein erstes Gewinde umfasst, wobei das Nivellierglied ein zweites Gewinde aufweist und wobei das erste Gewinde und das zweite Gewinde eine Gewindeverbindung ausbilden. Bei dieser Ausführungsform ist das Nivellierglied über das zweite Gewinde im ersten Gewinde schraubbar angeordnet.

Es kann vorgesehen, dass das Nivellierglied über eine Drehbewegung des Abtriebskegelrades derart drehbar ist, dass das Nivellierglied über eine Drehbewegung des Abtriebskegelrades in der Gewindeverbindung geschraubt wird. Hierdurch wird das Nivellierglied durch die Drehbewegung des Abtriebskegelrades derart verstellt, dass es sich um die Gewindelängsachse des ersten Gewindes dreht und dabei zwangsläufig auch entlang der Gewindelängsachse des ersten Gewindes bewegt.

Unter "Gewindelängsachse" wird hierin verstanden die Längsachse des Gewindes, um die sich das Gewinde herum windet.

Nach einer besonders bevorzugten Ausführungsform dieses Erfindungsgedankens verläuft die Gewindelängsachse des ersten Gewindes koaxial zur Drehachse des Abtriebskegelrades.

Nach einer besonders bevorzugten Ausführungsform der Erfindung weist das Abtriebsrad das erste Gewinde auf. Dabei kann das Abtriebskegelrad das erste Gewinde als integralen oder separaten Bestandteil aufweise. Soweit das Abtriebskegelrad das erste Gewinde als integralen Bestandteil aufweist, kann das erste Gewinde beispielsweise in das Abtriebskegelrad gebohrt sein. Soweit das Abtriebskegelrad das erste Gewinde als separaten Bestandteil aufweist, kann das erste Gewinde beispielsweise mit dem Abtriebskegelrad verbunden sein, beispielsweise form-, kraft oder materialschlüssig mit dem Abtriebskegelrad verbunden sein. Beispielsweise kann ein erstes Gewinde als separater Bestandteil des Abtriebskegelrades in Form einer Hülse mit einem Innengewinde vorgesehen sein, die mit dem Abtriebskegelrad verbunden ist, beispielsweise formschlüssig mit diesem verbunden ist.

Soweit das erste Gewinde wie vorstehend als Bestandteil des Abtriebskegelrades vorgesehen ist, hat dies den erheblichen Vorteil, dass die Drehbewegung des Nivelliergliedes, die notwendig ist, um das Nivellieglied über das zweite Gewinde in das erste Gewinde zu drehen, von der Längsbewegung des Nivelliergliedes entlang der Gewindelängsachse des ersten Gewindes und damit auch von der Längsbewegung des Nivelliergliedes entlang seiner Längsachse entkoppelt werden kann. Das Nivellierglied kann damit drehfest relativ zu seiner Umgebung stehen und gleichzeitig in das erste Gewinde herein- oder herausgeschraubt werden. Um die Drehfestigkeit des ersten Nivelliergliedes relativ zu seiner Umgebung zu sichern beziehungsweise ein "Mitdrehen" des Nivelliergliedes bei einem Einschrauben in oder aus dem ersten Gewinde zu vermeiden, kann vorgesehen sein, dass das Nivellierglied entlang der Gewindelängsachse des ersten Gewindes beziehungsweise entlang seiner Längsachse geführt ist.
Nach einer bevorzugten Ausführungsform ist vorgesehen, dass das Nivellierglied Führungsmittel aufweist, über welche das Nivellierglied entlang der Gewindelängsachse des ersten Gewindes beziehungsweise entlang der Längsachse des Nivelliergliedes führbar ist. Bei diesen Führungsmitteln kann es sich beispielsweise um ein Schienensystem handeln, durch welches das Nivellierglied führbar ist. Beispielsweise kann vorgesehen sein, dass das Nivellierglied im Bereich seiner Außenkontur eine Schiene aufweist, über welche das Nivellierglied in einer Nut des Maschinenschuhs entlang der Gewindelängsachse des ersten Gewindes beziehungsweise entlang der Längsachse des Nivelliergliedes führbar ist.
Das Nivellierglied kann beispielsweise als im Wesentlichen kreiszylindrischer Körper ausgebildet sein, der entlang seiner Umfangsfläche zumindest abschnittsweise ein zweites Gewinde in Form eines Außengewindes aufweist. Dieses Außengewinde kann insbesondere eine Gewindeverbindung mit dem Innengewinde der Hülse des Abtriebskegelrades ausbilden. Erfindungsgemäß ist vorgesehen, dass das Nivellierglied einen Abschnitt aufweist, der zur Anlage an eine Maschine ausgebildet ist. Dieser Abschnitt ist über eine Gelenkverbindung an dem Nivellierglied angeordnet. Beispielsweise kann dieser Abschnitt über ein Pfannengelenk an dem sich daran anschließenden Teil des Nivelliergliedes angeordnet sein. Ein Vorteil einer solchen Gelenkverbindung besteht insbesondere darin, dass die Anlagestellung des Nivelliergliedes über diesen gelenkigen Abschnitt an die individuellen Gegebenheiten der Maschine anpassbar ist.

Gegenstand der Erfindung ist ferner eine Maschine, die über wenigstens einen erfindungsgemäßen Maschinenschuh auf einem Untergrund angeordnet ist.

Weitere Merkmale der Erfindung ergeben sich aus den Unteransprüchen, den beigefügten Figuren, die ein Ausführungsbeispiel des erfindungsgemäßen Maschinenschuhs illustriert, sowie der zugehörigen Figurenbeschreibung.

Sämtliche Merkmale des erfindungsgemäßen Maschinenschuhs können, einzeln oder in Kombination, beliebig miteinander kombiniert sein.

Im nachfolgenden Ausführungsbeispiel des erfindungsgemäßen Maschinenschuhs ist ein Maschinenschuh in den Figuren illustriert und in der zugehörigen Figurenbeschreibung näher erläutert.

In den Figuren zeigt
- Figur 1: eine perspektivische Darstellung eines Ausführungsbeispiels eines erfindungsgemäßen Maschinenschuhs in einer Ansicht von schräg oben,
- Figur 2: eine Schnittansicht auf einen vertikalen Querschnitt durch den Maschinenschuh gemäß Figur 1,
- Figur 3: eine Explosionsdarstellung des Maschinenschuhs gemäß Figur 1 und
- Figuren 4a bis 4c: Schnittansicht auf je einen vertikalen Querschnitt durch den Maschinenschuh gemäß Figur 1 bei drei verschiedenen Stellungen des Nivelliergliedes.

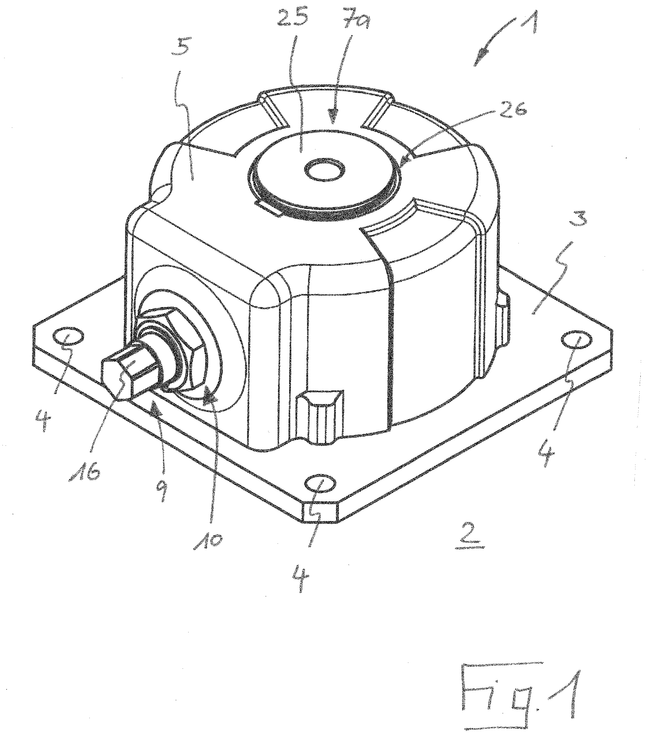

Der Maschinenschuh gemäß Figur 1 dient zur Nivellierung einer Maschine auf einem Untergrund. Hierzu ist der Maschinenschuh 1 auf einem Untergrund 2 anordenbar. Zur Anordnung des Maschinenschuhs 1 auf dem Untergrund 2 weist der Maschinenschuh 1 eine im Wesentlichen rechteckige Bodenplatte 3 auf, die auf einem Untergrund 2 auflegbar ist. Im Bereich der vier Ecken weist die Bodenplatte 3 jeweils eine kreisförmige Öffnung 4 auf, durch die jeweils ein Befestigungsmittel (nicht dargestellt) zur Verschraubung der Bodenplatte 3 auf dem Untergrund 2 führbar ist.

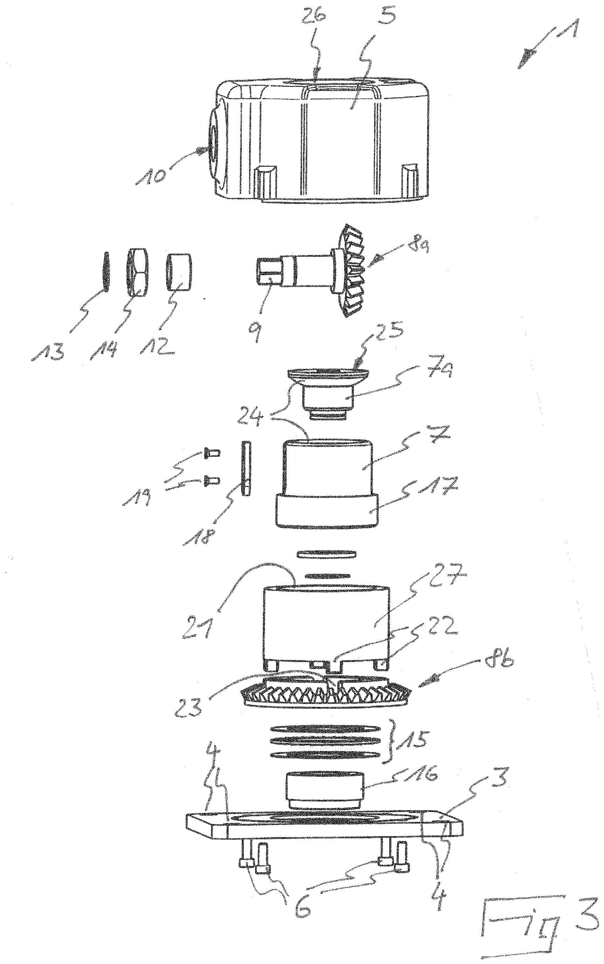

Auf der Bodenplatte 3 ist ein kappenförmiges Gehäuse 5 des Maschinenschuhs 1 befestigt. Zur Befestigung des Gehäuses 5 ist dieses über Schrauben 6 (siehe Figur 3), die von unten durch die Bodenplatte 3 geführt sind, an die Bodenplatte 3 geschraubt.

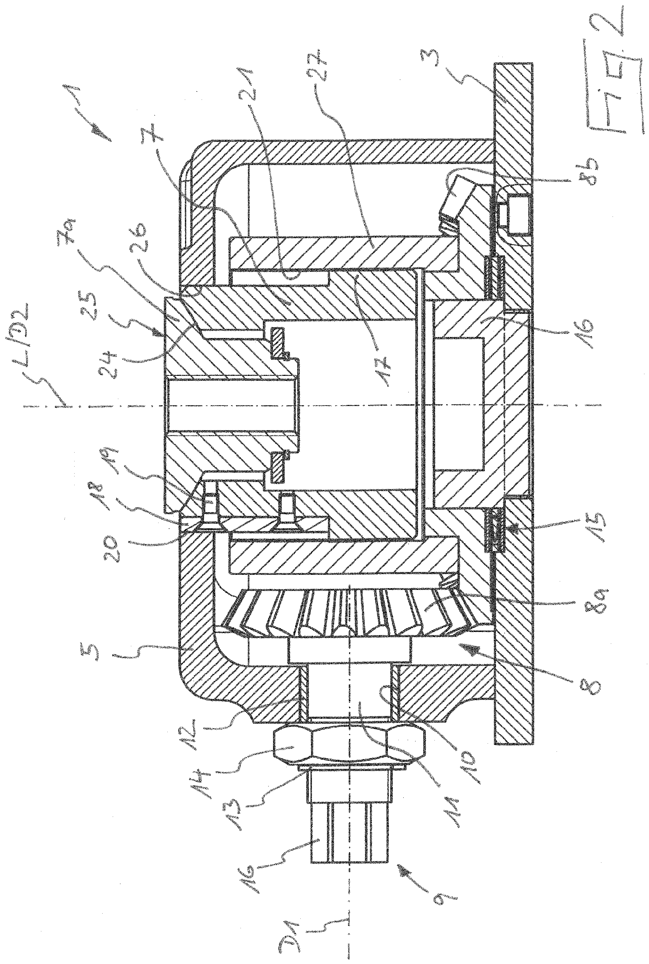

Der Maschinenschuh 1 umfasst ferner ein Nivellierglied 7 (siehe Figuren 2 bis 4c) zur Nivellierung einer Maschine (nicht dargestellt) auf dem Untergrund 2. Das Nivellierglied 7 ist entlang einer Längsachse L (siehe Figur 2) verstellbar, wobei diese Längsachse L bei der in Figur 1 dargestellten Anordnung des Maschinenschuhs 1 auf dem Untergrund 2 vertikal und durch das Gehäuse 5 verläuft. Dabei ist das Nivellierglied 7 bei einer Bewegung entlang der Längsachse L abschnittsweise durch eine obere Öffnung 26 des Gehäuses 5 in das Gehäuse 5 hinein- und aus diesem heraus bewegbar.

Bei der in Figur 1 dargestellten Stellung des Nivelliergliedes 7 ist dieses weitgehend in das Gehäuse 5 hineinbewegt, so dass von dem Nivellierglied 7 nur der aus dem Gehäuse 5 gerade noch herausragende Abschnitt 7a des Nivelliergliedes 7, der mit seiner Anlagefläche 25 zur Anlage an die Maschine ausgebildet ist, erkennbar ist.

Der Maschinenschuh 1 umfasst ferner ein Kegelradgetriebe 8 (siehe Figur 2), das mit dem Nivellierglied 7 derart in Eingriff steht, dass das Nivellierglied 7 über das Kegelradgetriebe 8 entlang seiner Längsachse L verstellbar beziehungsweise bewegbar ist.

Das Kegelradgetriebe 8 ist weitgehend in dem Gehäuse 5 angeordnet. Nur der zum Eingriff mit einem Handhabungsmittel (nicht dargestellt) zum manuellen Antrieb des Kegelradgetriebes 8 ausgebildete Abschnitt 9 des Kegelradgetriebes ragt durch eine Öffnung 10 des Gehäuses 5 aus diesem heraus.

Die Schnittansicht gemäß Figur 2 entlang eines vertikalen Querschnitts durch den Maschinenschuh1 gemäß Figur 1 lässt den inneren Aufbau und den Eingriff des Kegelradgetriebes 8 in das Nivellierglied 7 gut erkennen.

Das Kegelradgetriebe 8 umfasst ein als Kegelritzel ausgebildetes Antriebskegelrad 8a und ein als Tellerrad ausgebildetes Abtriebskegelrad 8b. Das Antriebskegelrad 8a ist um seine bei Anordnung des Maschinenschuhs 1 auf einem Untergrund horizontal verlaufende Drehachse D1 drehbar angeordnet. Hierzu ist das Antriebskegelrad 8a in der seitlichen Öffnung 10 des Gehäuses 5 mit seiner Welle 11 gelagert, wobei das Kegelritzel des Antriebskegelrades 8a im Inneren des Gehäuses 5 und die Welle 11 des Antriebskegelrades 8a durch die Öffnung 10 des Gehäuses 5 aus dem Gehäuse 5 nach außen geführt ist. Im Bereich der Öffnung 10 ist die Welle 11 von einer Hülse 12 umfangen, die als Gleitlager für die Welle 11 dient. Außenseitig der Öffnung 10 ist das Antriebskegelrad 8a durch einen in eine nutförmig umlaufene Vertiefung der Welle 11 aufgesteckten Sprengring 13 und eine zwischen Sprengring 13 und Gehäuse 5 angeordnete Sechskantmutter 14 gekontert.

Das als Tellerrad ausgebildete Abtriebskegelrad 8b ist auf der Bodenplatte 3 drehbar um seine Drehachse D2 angeordnet. Dabei ist das Abtriebskegelrad 8b auf einem Wälzlager 15 drehbar um eine Hülse 16 gelagert.

Die miteinander in Eingriff stehenden Zähne des Antriebskegelrades 8a und des Abtriebskegelrades 8b sind geradverzahnt. Die Drehachse D2 des Abtriebskegelrades 8b verläuft bei Anordnung des Maschinenschutzes 1 auf einem Untergrund 2 vertikal, so dass sich die Drehachse D1 des Antriebskegelrades und die Drehachse D2 des Abtriebskegelrades in einem Winkel von 90° schneiden. Ferner sind das Antriebskegelrad 8a und das Abtriebskegelrad 8b derart zu einander angeordnet, dass sich deren Drehachsen D1, D2 schneiden.

Das freie Ende der aus dem Gehäuse 5 herausragenden Welle 11 des Antriebskegelrades 8a ist als Außensechskant16 ausgebildet, dessen Längsachse koaxial zur Drehachse D1 des Antriebskegelrades 8a verläuft. Über einen manuell handhabbaren Innensechskant (nicht dargestellt), der mit dem Außensechskant 16 des Antriebskegelrades 8a in Eingriff steht, ist das Antriebskegelrad 8a manuell antreibbar.

Das beim Antrieb des Antriebskegelrad 8a erzeugte Drehmoment wird über die miteinander in Eingriff stehenden Zähne von Antriebskegelrad 8a und Abtriebskegelrad 8b auf das Abtriebskegelrad 8b übertragen, so dass die Drehbewegung des Antriebskegelrades 8a um seine Drehachse D1 zu einer Drehbewegung des Abtriebskegelrades 8b um seine Drehachse D2 führt.

Die Drehbewegung des Abtriebskegelrades 8b führt, wie nachfolgend ausgeührt, zu einer Verstellung des Nivelliergliedes 7 entlang der Längsachse L des Nivelliergliedes 7, die koaxial zur Drehachse D2 des Abtriebskegelrades 8b verläuft.

Das Abtriebskegelrad 8b weist ein erstes Gewinde 21 auf, das als Innengewinde in einer Hülse 27 ausgebildet ist, die als separater Bestandteil des Abtriebskegelrades 8b ausgebildet ist und mit diesem über Mitnehmer der Hülse 27 in Form in Axialrichtung ausgebildeter Vorsprünge 22, die in korrespondierenden Rücksprüngen 23 im Abtriebskegelrad 8b einliegen, formschlüssig verbunden ist. Dabei verläuft die Gewindelängsachse des ersten Gewindes 21 koaxial zur Drehachse D2 des Abtriebskegelrades 8b.

Das Nivellierglied 7 ist im Wesentlichen als kreiszylindrischer Körper ausgebildet und weist ein zweites Gewinde in Form eines Außengewindes 17 auf, dessen Gewindelängsachse koaxial zur Drehachse D2 des Abtriebskegelrades 8b verläuft. Ferner weist das Nivellierglied 7 ein Führungsmittel in Form einer Schiene 18 auf, die parallel zur Gewindelängsachse am Außenumfang des Nivelliergliedes 7 über zwei Schrauben 19 angeschraubt ist. Die Schiene 18 ist Bestandteil eines Schienensystems, über welches das Nivellierglied 7 entlang der Längsachse L verstellbar beziehungsweise bewegbar ist. Das Schienensystem umfasst neben der Schiene 18 eine Nut 20 im Gehäuse 5, in der die Schiene 18 führbar ist.

Das zweite Gewinde 17 des Nivelliergliedes 7 und das erste Gewinde 17 der Hülse 27 des Abtriebskegelrades 8b bilden eine Gewindeverbindung aus.

An seinem dem Abtriebskegelrad 8b gegenüberliegenden Ende weist das Nivellierglied 7 den Abschnitt 7a auf, der zur Anlage an eine Maschine ausgebildet ist. Dieser Abschnitt 7a ist über ein Pfannengelenk 24 gelenkig am Nivelliergliedes 7 angeordnet. Bei Anlage einer Maschine gegen die Anlagefläche 25 des Abschnitts 7a ist dieser über das Gelenk 24 an die individuellen Gegebenheiten der Maschine anpassbar ist.

In der praktischen Anwendung funktioniert der Maschinenschuh 1 gemäß dem Ausführungsbeispiel wie folgt:
Zunächst wird der Maschinenschuh 1 über die Bodenplatte 3 mittels durch die Öffnungen 4 geführter Befestigungsmittel auf einen Untergrund 2 befestigt. Anschließend wird eine Maschine gegen die Anlagefläche 25 des Abschnits 7a des Nivelliergliedes 7 zur Anlage gebracht. Die manuelle Nivellierung der Maschine erfolgt über den Antrieb des Antriebskegelrades 8a mittels eines manuell handhabbaren Innensechskants, der in den Außensechskant 16 der Welle 11 des Antriebskegelrades 8a eingereift und dieses damit antreibt. Das angetriebene Antriebskegelrad 8a überträgt sein Drehmoment auf das Abtriebskegelrad 8b, das hierdurch in eine Drehbewegung um seine Drehachse D2 bewegt wird.

Diese Drehbewegung des Abtriebskegelrades 8b wird über die Mitnehmer 22 auf die Hülse 27 des Abtriebskegelrades 8b übertragen. Über die zwischen dem Innengewinde 21 der Hülse 27 und dem Außengewinde 17 des Nivelliergliedes 7 ausgebildete Gewindeverbindung windet beziehungsweise schraubt sich das Gewinde 17 des Nivelliergliedes 17 um das Gewinde 21 der Hülse 27. Auf Grund der über die Führungsmittel 18, 19, 20 zur Umgebung drehfesten Anordnung des Nivelliergliedes7 wird dieses durch die Windung der Gewindeverbindung entlang seiner Längsachse L verstellt. Diese Längsbewegung des Nivelliergliedes 7 wird auf Abschnitt 7a des Nivelliergliedes 7 übertragen, wodurch die Maschine mittels des Nivelliergliedes 7 auf dem Untergrund 2 nivellierbar ist.

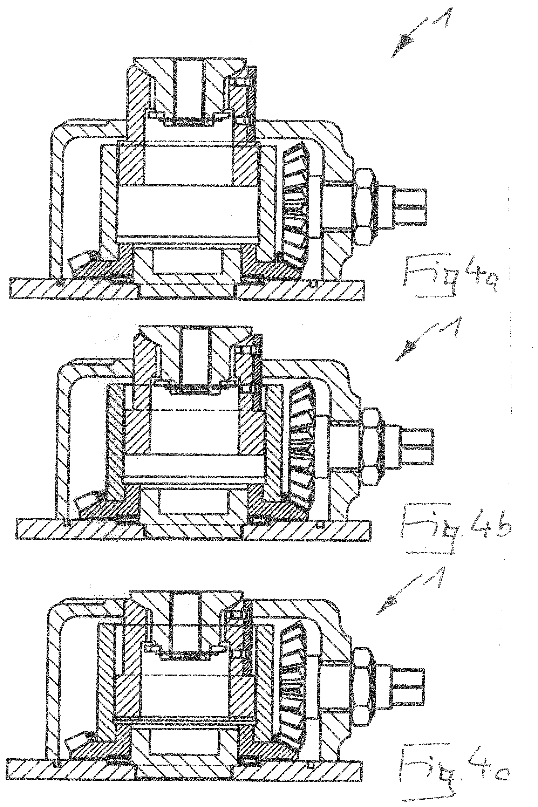

Die Figuren 4a, 4b und 4c zeigen den Maschinenschuh 1 in verschiedenen Stellungen des Nivelliergliedes 7 entlang seiner Längsachse L. Gut zu erkennen ist hier, dass das Nivellierglied 7 entlang seiner Längsachse L durch die Öffnung 26 an der Oberseite des Gehäuses 5 abschnittsweise in das Gehäuse 5 hinein- und aus diesem hinaus bewegbar ist.

Sämtliche Elemente des im Ausführungsbeispiel erläuterten Maschinenschuhs 1 sind aus Stahl gefertigt.

## Patentansprüche

1. Maschinenschuh (1), umfassend die folgenden Merkmale:
1.1 ein verstellbares Nivellierglied (7) zur Nivellierung einer Maschine auf einem Untergrund (2);
1.2 ein Kegelradgetriebe (8);
1.3 das Nivellierglied (7) und das Kegelradgetriebe (8) stehen derart miteinander in Eingriff, dass das Nivellierglied (7) über das Kegelradgetriebe (8) verstellbar ist;
1.4 der Maschinenschuh (1) ist auf einem Untergrund anordenbar;
1.5 das Nivellierglied (7) weist einen Abschnitt (7a) auf, der zur Anlage an eine Maschine ausgebildet ist; **dadurch gekennzeichnet, dass**
1.6 der Abschnitt (7a) über eine Gelenkverbindung (24) an dem Nivellierglied (7) angeordnet ist.

2. Maschinenschuh (1) nach Anspruch 1, bei dem das Kegelradgetriebe (8) ein Antriebskegelrad (8a) und ein Abtriebskegelrad (8b) umfasst.

3. Maschinenschuh (1) nach Anspruch 2, bei dem das Antriebskegelrad (8a) manuell antreibbar ist.

4. Maschinenschuh (1) nach Anspruch 2, bei dem das Nivellierglied (7) über das Abtriebskegelrad (8b) verstellbar ist.

5. Maschinenschuh (1) nach Anspruch 2, bei dem das Nivellierglied (7) derart über das Abtriebskegelrad (8b) verstellbar ist, dass das Nivellierglied (7) mittels einer Drehbewegung des Abtriebskegelrades (8b) in eine Längsbewegung entlang der Drehachse (D2) des Abtriebskegelrades (8b) bewegbar ist.

6. Maschinenschuh (1) nach wenigstens einem der vorhergehenden Ansprüche, umfassend ferner ein erstes Gewinde (21), wobei das Nivellierglied (7) ein zweites Gewinde (17) aufweist und wobei das erste Gewinde (21) und das zweite Gewinde (17) eine Gewindeverbindung ausbilden.

7. Maschinenschuh (1) nach Ansprüche 2 und 6, bei dem die Gewindelängsachse des ersten Gewindes (21) koaxial zur Drehachse (D2) des Abtriebsrades (8b) verläuft.

8. Maschinenschuh (1) nach Ansprüche 2 und 6, bei dem das Abtriebskegelrad (8b) das erste Gewinde (21) aufweist.

9. Maschinenschuh (1) nach Anspruch 8, bei dem das Nivellierglied (7) entlang der Gewindelängsachse des ersten Gewindes (21) geführt ist.

10. Maschine, die auf einem Untergrund angeordnet ist, wobei zwischen der Maschine und dem Untergrund wenigstens ein Maschinenschuh (1) gemäß wenigstens einem der vorhergehenden Ansprüche angeordnet ist.

## Claims

1. Machine shoe (1) comprising the following features:
1.1 an adjustable levelling member (7) for levelling a machine on a base (2);
1.2 a bevel gear (8);
1.3 the levelling member (7) and the bevel gear (8) are engaged with each other in such manner that the levelling member (7) can be adjusted via the bevel gear (8);
1.4 the machine shoe (1) can be arranged on a base;
1.5 the levelling member (7) has a section (7a) which is designed to bear flush against a machine; **characterized in that**
1.6 the section (7a) is arranged on the levelling member (7) by means of an articulated joint (24).

2. Machine shoe (1) according to Claim 1, wherein the bevel gear (8) comprises a drive bevel gear (8a) and an output bevel gear (8b).

3. Machine shoe (1) according to Claim 2, wherein the drive bevel gear (8a) can be driven manually.

4. Machine shoe (1) according to Claim 2, wherein the levelling member (7) can be adjusted via the output bevel gear (8b).

5. Machine shoe (1) according to Claim 2, wherein the levelling member (7) is adjustable via the output bevel gear (8b) in such manner that the levelling member (7) can be moved in a longitudinal motion along the axis of rotation (D2) of the output bevel gear (8b) by a rotary movement of the output bevel gear (8b).

6. Machine shoe (1) according to at least one of the preceding claims, further comprising a first thread (21), wherein the levelling member (7) has a second thread (17) and wherein the first thread (21) and the second thread (17) form a threaded connection.

7. Machine shoe (1) according to Claims 2 and 6, wherein the longitudinal axis of the first thread (21) extends coaxially with the axis of rotation (D2) of the output bevel gear (8b).

8. Machine shoe (1) according to Claims 2 and 6, wherein the output bevel gear (8b) includes the first thread (21).

9. Machine shoe (1) according to Claim. 8, wherein the levelling member (7) is guided along the longitudinal axis of the first thread (21).

10. Machine disposed on a base, wherein at least one machine shoe (1) according to at least one of the preceding claims is arranged between the machine and the base.

## Revendications

1. Patin de machine (1) comprenant les caractéristiques suivantes :
1.1 un élément de mise à niveau réglable (7) pour la mise à niveau d'une machine sur un sol (2),
1.2 un mécanisme à pignons coniques (8),
1.3 l'élément de mise à niveau (7) et le mécanisme à pignons coniques (8) étant en prise l'un avec l'autre de telle manière que l'élément de mise à niveau (7) peut être déplacé sur le mécanisme à pignons coniques (8),
1.4 le patin de machine (1) peut être disposé sur un sol,
1.5 l'élément de mise à niveau (7) comporte une section (7a) qui est constituée pour dépose sur une machine, **caractérisé en ce que**
1.6 la section (7a) est disposée par le biais d'une liaison articulée (24) sur l'élément de mise à niveau (7).

2. Patin de machine (1) selon la revendication 1 pour lequel le mécanisme à pignons coniques (8) comprend un pignon conique d'entraînement (8a) et un pignon conique mené (8b).

3. Patin de machine (1) selon la revendication 2, pour lequel le mécanisme à pignons coniques (8a) peut être entraîné par le biais du pignon conique mené.

4. Patin de machine (1) selon la revendication 2, pour lequel l'élément de mise à niveau (7) peut être réglé par le biais du pignon conique mené (8b).

5. Patin de machine (1) selon la revendication 2, pour lequel l'élément de mise à niveau (7) peut être réglé par le biais du pignon conique mené (8b) de telle manière que l'élément de mise à niveau (7) est mobile au moyen d'un mouvement rotatif du pignon conique mené (8b) dans un mouvement longitudinal le long de l'axe de rotation (D2) du pignon conique mené (8b).

6. Patin de machine (1) selon au moins l'une quelconque des revendications précédentes, comprenant en outre un premier filetage (21), l'élément de mise à niveau (7) comportant un deuxième filetage (17) et le premier filetage (21) et le deuxième filetage (17) constituant un raccord fileté.

7. Patin de machine (1) selon les revendications 2 et 6, pour lequel l'axe lougitudinal de filetage du premier filetage (21) passe coaxialement à l'axe de rotation (D2) du pignon mené (8b).

8. Patin de machine (1) selon les revendications 2 et 6, pour lequel le pignon conique mené (8b) comporte le premier filetage (21).

9. Patin de machine (1) selon la revendication 8, pour lequel l'élément de mise à niveau (7) est guidé le long de l'axe longitudinal de filetage du premier filetage (21).

10. Machine, qui est disposée sur un sol, au moins un patin de machine (1) étant disposé entre à machine et le sol selon au moins l'une quelconque des revendications précédentes.
